# EUROPEAN PATENT APPLICATION

(11) **EP 4 671 501 A2**
(43) Date of publication of application: **31.12.2025**
(21) Application number: 25185653.0
(22) Date of filing: 26.06.2025
(51) Int. Cl.: F01D 11/00

(54) **METHOD FOR LASER TREATING A METALLIC SUBSTRATE OF A PISTON SEAL RING**

(30) Priority: 26.06.2024 US 202463664500 P
(71) Applicant: RTX Corporation, Farmington, CT 06032 (US)
(72) Inventor: THAYER, Henry H., Wethersfield, 06109 (US); TAGHADDOS, Elaheh Fattahi, West Hartford, 06117 (US); MOHSENI, Hamidreza, Avon, 06001 (US); LEE, Seung-Yub, Glastonbury, 06033 (US); FURRER, David U., Marlborough, 06447 (US)
(74) Representative: Dehns

(57) **Abstract**

A method for laser treating a substrate of a piston seal ring (PSR) (20) for a gas turbine engine includes: deforming the substrate to place a portion (310) of a first surface (30) of the substrate in tensile stress; and while holding the substrate deformed, laser treating the portion (310). After the laser treating but before release of the deformation, the first surface (30) may remain in tensile stress. Release of the deformation then at least partially cancels the tensile stress.

## Description

### BACKGROUND

The disclosure relates to gas turbine engines. More particularly, the disclosure relates to a laser treating of metallic substrates.

Gas turbine engines (used in propulsion and power applications and broadly inclusive of turbojets, turboprops, turbofans, turboshafts, industrial gas turbines, and the like) have components that may be subject to laser treatment.

A PSR seals between an inner member and an outer member. The inner member and outer member may be static structure such as case components. Or, the inner member and the outer member may be rotating structure such as components of a spool or rotor. The inner member and the outer member may be subject to small excursions relative to each other. For example, torque loads may cause small rotational movements; thrust loads or differential thermal expansion may cause small axial movements. Vibration may also cause small rotational, radial, or axial movements. Such small or transient rotational movements, however, are distinguished from continuous relative rotational movement such as in face seal or shaft seal between two relatively rotating components (e.g., two different spools or a spool and a static structure).

The PSR is accommodated in an outer diameter groove in the inner member. Under dynamic and/or pressure loading, the PSR seals against a sidewall of the groove and an inner diameter surface of the outer member. In one example of such a situation involving a rotor, the inner member is a shaft and the outer member is a rotor stack of the associated spool. In a more particular example, the outer member is a seal runner protruding axially from a protuberant bore of a disk of the rotor stack. Tension in the shaft holds the rotor stack in precompression. Small rotational, axial, and/or radial displacements of the shaft and seal runner may be caused by factors including transients and changes in operational conditions such as torque and thrust loads (which will vary between one steady state condition and another steady state condition). In such an example, the PSR is accommodated in an outer diameter (OD) groove in the shaft.

PSRs are often small in cross section so as to be relatively compliant compared to the contacting structure (e.g., members forming the groove and runner). The ring is split for assembly purposes and/or to allow radial expansion under centrifugal loading. The ring circumferential ends may form an overlapping joint (e.g., a shiplap joint). The small cross section and split provide the ring with little hoop strength and twist resistance. For example, with a nickel alloy shaft and nickel alloy runner, ring material may be nickel or cobalt alloy and may have generally similar material hardness (at least of a substrate if coated). Example coatings are one or more sprayed or brushed solid lubricant layers directly atop the substrate outer diameter surface and extending onto the substrate axial end surfaces.

One group of examples of PSR substrates involves cobalt-based chromium-tungsten alloys. An example alloy is AMS5894/Cobalt Alloy 6B/UNS R30016. The PSR substrate may have a coating as discussed above.

In an example manufacture process, the substrate may be formed from forged rod stock. Ring precursors are cut/machined from the rod (e.g., on a cutting lathe or the like) to an annulus with the PSR nominal cross-sectional shape. The resulting precursor may be grit blasted, particularly on the outer diameter (OD) surface to clean and roughen in preparation for coating application. Then, the annulus may be cut (e.g., by CNC mill, wire EDM, water jet or other tool) to form a shiplap or similar joint (to allow PSR expansion/contraction). Then, the coating, if any, may be applied as discussed above.

In other known processes for other articles, laser cleaning of an article is performed prior to coating application. This removes oil and other organics. An air flow serves to cool and evacuate volatilized contaminants. One particular example is cleaning an MCrAlY bondcoat prior to ceramic thermal barrier coating application. An example of this is found in US Patent Application Publication 2022/0298645A1, Thayer et al., published September 22, 2022, and entitled "Laser Induced, Fine Grained, Gamma Phase Surface for NiCoCrAlY Coating Prior to Ceramic Coat".

Smolina et al. describe laser remelt and laser clad coatings for Stellite^{®} 6 Co-Cr alloy of Kennametal Inc., Latrobe PA. Smolina, Irina & Kobiela, Karol, "Characterization of Wear and Corrosion Resistance of Stellite 6 Laser Surfaced Alloyed (LSA) with Rhenium", Coatings, 3 March 2021, Vol. 11 (292), MDPI, Basel, Switzerland. There are several related Stellite^{®} family alloys. One such alloy is generically known as Cobalt Alloy 6b (wrought specification AMS 5894 - UNS R30016). Wrought microstructure is characterized by evenly distributed isolated (rather than interconnected) carbides. Interconnected carbides of cast microstrucure contributes to brittleness. Wrought microstructure generally offers enhanced strength and wear resistance.

Separately, laser-induced oxidation is generally discussed in Nánai et al., "Laser-induced oxidation of metals: state of the art", Thin Solid Films, 20 April 1997, pp. 160-164, Volume 298, Issues 1-2, Elsevier Science S.A., Lausanne, Switzerland.

### SUMMARY

One aspect of the disclosure, which the Applicant expressly reserves the right to claim independently, involves a method for laser treating a substrate, the method comprising: deforming the substrate to place a portion of a first surface of the substrate in tensile stress; and while holding the substrate deformed, laser treating the portion.

Another aspect involves method for laser treating a substrate of a piston seal ring (PSR) for a gas turbine engine, the method comprising: deforming the substrate to place a portion of a first surface of the substrate in tensile stress; and while holding the substrate deformed, laser treating the portion.

In a further example of any of the foregoing, additionally and/or alternatively, the laser treating forms an oxide coating on the substrate.

A further example of any of the foregoing may additionally and/or alternatively include releasing the substrate from the holding to allow at least partial relaxation of the deformation.

In a further example of any of the foregoing, additionally and/or alternatively, the tensile stress is 750MPa to 1035MPa and the laser treating normalizes the tensile stress to a reduced value while the PSR surface (/the first surface of the substrate) is under tension.

In a further example of any of the foregoing, additionally and/or alternatively, the substrate is not shot peened before the laser treating.

In a further example of any of the foregoing, additionally and/or alternatively, the laser treating does not do any of: weld to the substrate; shock peen the substrate; and deposit metal on the substrate.

In a further example of any of the foregoing, additionally and/or alternatively, the deforming comprises: applying pressure to a second surface opposite the region (/portion of the first surface); and applying pressure to the first surface at two locations wherein the laser treating is between the two locations.

In a further example of any of the foregoing, additionally and/or alternatively, the substrate (is a piston seal ring substrate that) has a shiplap joint and the first surface is an outer diameter (OD) surface.

A further example of any of the foregoing may additionally and/or alternatively include shifting the location of the portion.

In a further example of any of the foregoing, additionally and/or alternatively, the shifting is a stepwise indexing.

A further example of any of the foregoing may additionally and/or alternatively include restraining circumferential end portions of the PSR at the shiplap joint while applying pressure to the second surface and to the first surface opposite from the shiplap joint relative to the location of force application to the second surface.

In a further example of any of the foregoing, additionally and/or alternatively, the restraining is simultaneous restraint of the respective end portions while the applying pressure at the first surface is at two respective locations on opposite sides of the shiplap joint.

In a further example of any of the foregoing, additionally and/or alternatively, the restraining comprises inserting pins into recesses in overlapping portions of the shiplap joint.

In a further example of any of the foregoing, additionally and/or alternatively, a method for using a substrate treated according to the method comprises: installing the substrate as a piston seal ring (PSR) in a gas turbine engine between a shaft of a spool and a disk of the spool; and running the engine to produce non-continuous motion between the PSR and the disk.

A further aspect of the disclosure, which the Applicant expressly reserves the right to claim independently, involves a method for heat treating a substrate, the method comprising: a step for applying a tensile stress to a portion of a first surface of the substrate; and a step for laser treating the portion.

In a further example of any of the foregoing, additionally and/or alternatively, the substrate forms a piston seal ring having a joint and the method further comprises contacting one or more portions of the joint to restrain movement during the laser treating.

In a further example of any of the foregoing, additionally and/or alternatively, the laser treating forms a surface oxide on the substrate.

A further aspect of the disclosure involves a (piston) seal ring (for a gas turbine engine) having: an inner diameter surface; an outer diameter surface; a fist axial end surface; a second axial end surface; and first and second axially overlapping circumferential end portions. The first and second axially overlapping circumferential end portions each have a recess (wherein the recess is a non-through hole).

In a further example of any of the foregoing, additionally and/or alternatively: each said recess has a proximally facing wall section; and/or each said recess has a radially outward facing wall section.

In a further example of any of the foregoing, additionally and/or alternatively, each said recess is a non-through hole.

In a further example of any of the foregoing, additionally and/or alternatively, the seal ring has a zone of residual compressive stress near the outer diameter surface.

A further aspect of the disclosure, which the Applicant expressly reserves the right to claim independently, involves a seal ring having: an inner diameter surface; an outer diameter surface; a fist axial end surface; a second axial end surface; and first and second axially overlapping circumferential end portions. The seal ring has a zone of residual compressive stress near the outer diameter surface.

A further aspect of the disclosure, which the Applicant expressly reserves the right to claim independently, involves a seal ring comprising a substrate having: an inner diameter surface; an outer diameter surface; a first zone representing a by-weight majority of the substrate and having Co as a largest by weight constituent element and at least 18.0 weight percent Cr; and a second zone, radially outward of the first zone, and having Cr₂O₃ and Cr₂CoO₄.

In a further example of any of the foregoing, additionally and/or alternatively, there may be a compressive stress in the first zone adjacent an interface with the second zone

In a further example of any of the foregoing, additionally and/or alternatively, the first zone has Cr as a second largest by-weight constituent element.

In a further example of any of the foregoing, additionally and/or alternatively, the first zone has no more than 20.0 weight percent any element other than Co, Cr, and Ni.

In a further example of any of the foregoing, additionally and/or alternatively, the first zone has no more than 20.0 weight percent any element other than Co and Cr.

In a further example of any of the foregoing, additionally and/or alternatively the first zone comprises by weight percent: ≤2.0 C; ≤2.5 Mn; ≤2.5 Si; ≤0.1 P; ≤0.1 S; 18.0-35.0Cr; ≤30.0 Ni; ≤8.0 max Mo; ≤16.0 W; ≤4.0 Fe; and balance Co and no more than 7.0 each other element, if any, individually and 15.0 all other elements total.

In a further example of any of the foregoing, additionally and/or alternatively, the first zone comprises by weight percent: 0.90-1.90 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

In a further example of any of the foregoing, additionally and/or alternatively, the first zone comprises by weight percent: 0.90-1.40 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

In a further example of any of the foregoing, additionally and/or alternatively, among said other elements, Cu, Ag, Pb, N, As, Sb, Bi, O, Se, Te, He, and Ar may each be ≤0.1 weight percent or at lower impurity levels and/or Mg, Ca, Y, Ce, La, Zr and B ≤1.0 weight percent and Zr ≤2.0 weight percent.

In a further example of any of the foregoing, additionally and/or alternatively, the second zone has a thickness of at least 50 nanometers.

In a further example of any of the foregoing, additionally and/or alternatively, the second zone is a majority by weight Cr₂O₃ and Cr₂CoO₄ combined.

In a further example of any of the foregoing, additionally and/or alternatively, the second zone has combined Cr₂O₃ and Cr₂CoO₄ content of at least 25% by volume over a thickness of at least 50 nanometers.

In a further example of any of the foregoing, additionally and/or alternatively, the second zone has a 1:1 or greater volume ratio of Cr₂O₃ to Cr₂CoO₄ content over a thickness of at least 50 nanometers.

In a further example of any of the foregoing, additionally and/or alternatively, the first zone has: 10% to 20% by weight carbides; of said carbides, a majority by weight are of the formulas: MC where M = W, Ta, Nb, Zr, and/or Ti; and/or M₇C₃ where M = Cr, W, and/or Mo; and of said carbides, a minority by weight are of the formulas: M₂₃C₆ where M = Cr and/or Mo; and/or M₆C where M = Mo and/or W.

In a further example of any of the foregoing, additionally and/or alternatively, the seal ring is a split ring.

In a further example of any of the foregoing, the first zone properties may be as identified for one or more of the examples of Table II or the ranges of Table III optionally with modifications discussed thereafter.

In a further example of any of the foregoing, the identified second zone properties and/or dimensions may exist over at least 10% of a total surface area of the seal ring or substrate and/or at least 50% of an outer diameter surface thereof.

In a further example of any of the foregoing, additionally and/or alternatively, a turbine engine including the seal ring and further comprises: a groove accommodating the seal ring; and a counterface contacting the second zone.

**In** a further example of any of the foregoing, additionally and/or alternatively the groove is on a tie shaft of a spool; and the counterface is on a disk bore of the spool.

**In** a further example of any of the foregoing, additionally and/or alternatively, a method for manufacturing the seal ring comprises: machining an alloy piece to form the substrate; and laser treating an outer diameter surface of the substrate to form the second zone.

**In** a further example of any of the foregoing, additionally and/or alternatively, the laser treating is in an oxidative atmosphere.

In a further example of any of the foregoing, additionally and/or alternatively, a method for using the seal ring comprises: installing in an engine so that the second zone contacts an inner diameter surface of an outer member; and running the engine.

In a further example of any of the foregoing, additionally and/or alternatively, the installing is to a groove.

A further aspect of the disclosure, which the Applicant expressly reserves the right to claim independently, involves a method for coating a seal ring, the method comprising: laser cleaning a cobalt-based ring substrate; and laser treating an outer diameter surface of the cleaned substrate to form an oxide-containing layer. Optionally, the substrate has a composition as discussed for any of the examples above or below in the description below and/or the oxide-containing layer has a composition or other properties as discussed for any of the embodiments above (e.g., the "second zone") or below or in the description below.

In a further example of any of the foregoing, additionally and/or alternatively the substrate has: an outer diameter surface and an inner diameter surface; a first axial end surface and a second axial end surface; and a first circumferential end and a second circumferential end forming a shiplap joint. The laser cleaning is over a greater area of surface than the laser treating.

In a further example of any of the foregoing, additionally and/or alternatively one or more of: the laser treating is at a higher power than the laser cleaning; the laser treating is at a higher fluence than the laser cleaning; the laser treating comprises passes of greater overlap than the laser cleaning; the laser treating is performed in a more oxidative environment than the laser cleaning; the laser treating is performed in an oxygen-enriched environment and the laser cleaning is performed in an argon-enriched environment; the laser cleaning is performed with forced air cooling and the laser treating is performed without said forced air cooling; and the laser treating is performed with the same laser as the laser cleaning.

In a further example of any of the foregoing, additionally and/or alternatively, the oxide-containing layer comprises Cr₂O₃ and Cr₂CoO₄.

In a further example of any of the foregoing, additionally and/or alternatively, the laser treating comprises a series of overlapping passes in one direction followed by a series of overlapping passes in an orthogonal direction.

In a further example of any of the foregoing, additionally and/or alternatively, prior to the laser treating the cobalt-based substrate comprises by weight percent: 0.90-1.40 C; 0.50-2.00 Mn; 0.20-2.00 Si; 0.04 max P; 0.03 max S; 28.00-32.00 Cr; 3.00 max Ni; 1.50 max Mo; 3.50-5.50 W; 3.0 max Fe; and balance Co and no more than 1.0 each other element, if any, individually and 5.0 all other elements total.

In a further example of any of the foregoing, additionally and/or alternatively, one or both of: there is no grit blasting of the substrate; and there is no metallic coating application between the laser treatment and installing the seal ring in a turbomachine.

A further aspect of the disclosure, which the Applicant expressly reserves the right ot claim independently, involves, a method for manufacturing a seal ring, the method comprising: cleaning a substrate; and laser-treating an outer diameter surface of the substrate to form an oxide-containing layer comprising Cr₂O₃ and Cr₂CoO₄. Optionally, the substrate (pre-treatment and/or portion below the layer) has a composition as discussed for any of the embodiments above or below or in the description below and/or the oxide-containing layer has a composition as discussed for any of the embodiments above (e.g., the "second zone") or below or in the description below.

In a further example of any of the foregoing, additionally and/or alternatively, the substrate has Co as a largest by-weight constituent element and at least 18.0 weight percent Cr; the substrate has no more than 20.0 weight percent any element other than Co, Cr, and Ni.

In a further example of any of the foregoing, additionally and/or alternatively, the substrate has Cr as a second largest by weight component.

In a further example of any of the foregoing, additionally and/or alternatively, the coating layer is at least 50 nanometers thick.

The details of one or more examples are set forth in the accompanying drawings and the description below. Other features, objects, and advantages will be apparent from the description and drawings, and from the claims.

### BRIEF DESCRIPTION OF THE DRAWINGS

FIG. 1 is a view of a piston seal ring (PSR).
FIG. 1A is a view of joint of the PSR.
FIG. 2 is a view of a gas turbine engine containing the PSR.
FIG. 2A is an enlarged view of a rotor region of the gas turbine engine showing sealing engagement by the PSR.
FIG. 2B is an enlarged view of an OD coating on the PSR.
FIG. 3 is a partial schematic end view of a PSR in a pre-stressing fixture during outer diameter (OD) laser treatment.
FIG 4 is an OD view of the fixture during treatment of a shiplap region of the PSR.
FIG. 4A is an enlarged view of the shiplap region in FIG. 4.
FIG. 5 is a partial sectional view of the fixture of FIG. 4.
FIG. 6 is a partial schematic end view of the PSR in a pre-stressing fixture during inner diameter (ID) laser treatment.
FIG. 7 is a partial schematic end view of a flat member in a pre-stressing fixture during laser treatment.
FIG. 8 is a view of an S-hook during laser treatment of a first end concavity.
FIG. 9 is a view of the S-hook during laser treatment of a second end concavity.
FIG. 10 is a view of a rod in a tension pre-stressing fixture during laser treatment.
FIG. 11 is a view of a plate in a tension pre-stressing fixture during laser treatment.
FIG. 12 is a view of a plate in a bending pre-stressing fixture during laser treatment.
FIG. 13 is a view of a rod in a bending and tension pre-stressing fixture during laser treatment.

Like reference numbers and designations in the various drawings indicate like elements.

### DETAILED DESCRIPTION

Discussed further below, a surface portion of a substrate to be laser treated is placed under tensile stress during the laser treatment. This may mitigate tensile stresses that would form otherwise. Heating during the laser treatment may thermally expand a surface region generating temporary compressive stress. However, that stress may partially relieve during the treatment. Upon cooling, the relieved compressive stress may turn into tensile stress. The tensile stress may render the surface prone to damage from wear, fatigue, corrosion, and the like. If the surface is, instead, mechanically placed under tensile stress for the laser treatment, even if the cooling leaves tensile stress release of the mechanically-applied strain generates a counteracting compressive stress that may at least partially counter the tensile stress.

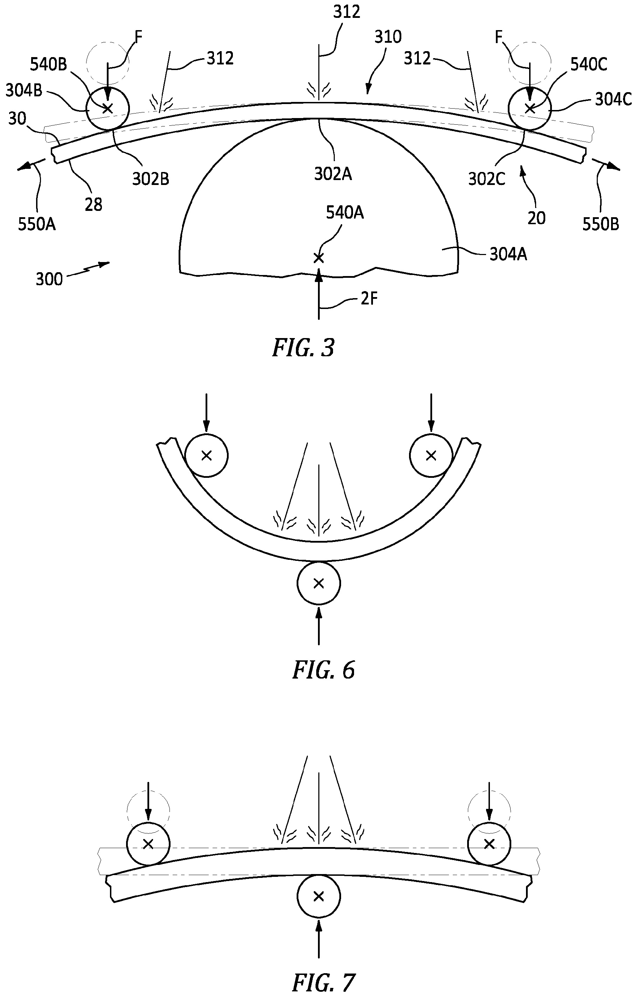

A particular laser treatment involves the formation of a lubricious oxide. A particular example discussed is a piston seal ring wherein at least the outer diameter (OD) surface of the PSR 20 (FIG. 3) is subject to such laser treatment. One group of examples of PSR or other substrates relevant to lubricious oxide growth involves cobalt-based chromium-tungsten alloys. An example alloy is AMS5894/Cobalt Alloy 6B/UNS R30016. Further variations are discussed below.

In a particular discussed example, the PSR has already gone through the basics of its manufacture. This may include machining of the cross-sectional shape, machining of the joint (e.g., shiplap) features, rolling into an annulus (wherein, in a relaxed condition, the circumferential ends at the joint are contacting or closely spaced), and polishing.

The basic placing the OD surface in tensile stress may be achieved by placing the PSR in a fixture 300 wherein there is a central contact point 302A (e.g., formed by a central roller 304A having an axis of rotation 540A) along the ID surface 28 of the PSR and a pair of OD lateral contact points 302B, 302C (e.g., also with rollers 304B, 304C having rotation axes 540B, 540C)) on opposite circumferential sides of the central roller. This leaves an exposed region 310 of the OD surface 30 between the two lateral rollers for receiving the laser treatment. FIG. 3 shows traversal of the laser beam 312 through the treatment area/zone. Such traversal may be particularly relevant for stepwise indexed movements of the PSR. The central roller may be driven (for rotation about its axis 540A) for moving the seal through the treatment area (e.g., motor driven).

An actuator or actuators not shown (e.g., hydraulic or pneumatic) may bring the lateral rollers 304B, 304C into engagement with the PSR OD surface or the central roller into such engagement with the ID surface. FIG. 3 shows a disengaged roller position and relaxed/unstressed seal arc in broken lines. FIG. 3 generically identifies the forces on the lateral rollers as F. The result is to locally tighten the curvature and deform PSR substrate placing the region of the OD surface between the two lateral rollers in tension. Example tension at the surface is initially 110 ksi to 150 ksi (758 MPa to 1034 MPa or 750 MPa to 1035 MPa, more broadly 500 MPa to 1100 MPa or alternatively 750 MPa to 1100 MPa). The laser may raster this region to perform a treatment. The seal may be continuously rotated (in direction 550A or 550B, e.g., via driving the central roller manually or via a motor (not shown)) or there may be a stepwise indexing while the laser is treating the OD surface. FIG. 3 shows traversal of the laser beam 312 through the treatment area/zone. Such traversal may be particularly relevant for stepwise indexed movements of the PSR. In some examples, the lateral rollers may be undriven but can rotate to avoid scraping the seal when force is applied and released or if the seal movement is driven without releasing the lateral rollers. In some examples, the seal rotation or indexing may simply be directly by hand rather than driving a roller.

The laser treatment may have the effect of normalizing the tensile stress (while the applied strain is maintained) to a value in the vicinity of 700 MPa. This is the case regardless of the applied strain, if any. Thus, if the applied strain is sufficient to bring the stress to a value at least moderately over 700 MPa, post-treatment release of that strain will essentially negate the tensile stress associated with the laser treatment. At higher values of initially-applied tension (e.g., over 700 MPa) release of the strain may be effective to place the surface in slight to moderate compression. However, even if the applied strain is only enough to apply a tensile stress of 500 MPa, post-treatment release of that strain will at least partially cancel the tensile stress that would have been left after treating an unstrained substrate. Thus, the treated article (PSR) may be left with a (positive) residual compressive stress at/near the treated surface (PSR OD surface in the example).

With the example PSR, there may be issues of applying tension near the ends of the cross-section (e.g., approaching the joint from either end). One possibility is to simply not stress those terminal areas and, instead, laser treat them while not under stress/strain.

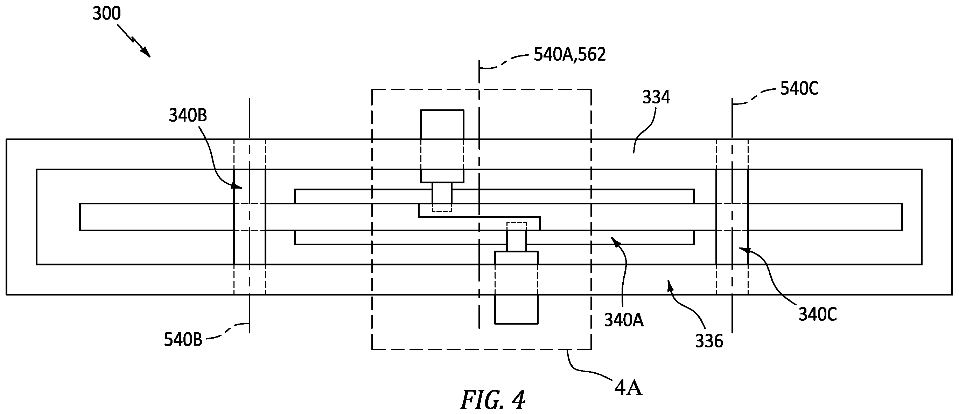

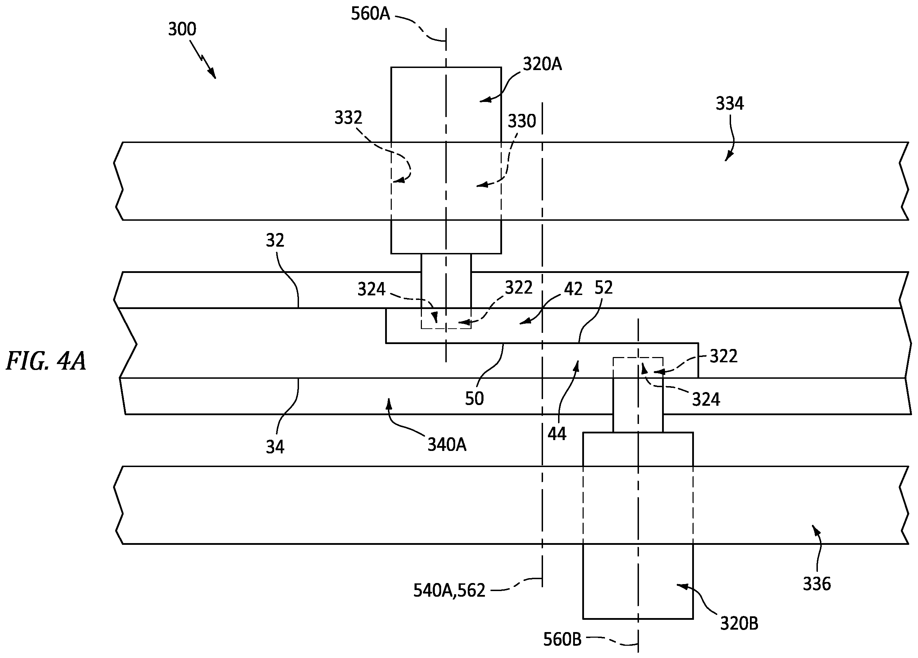

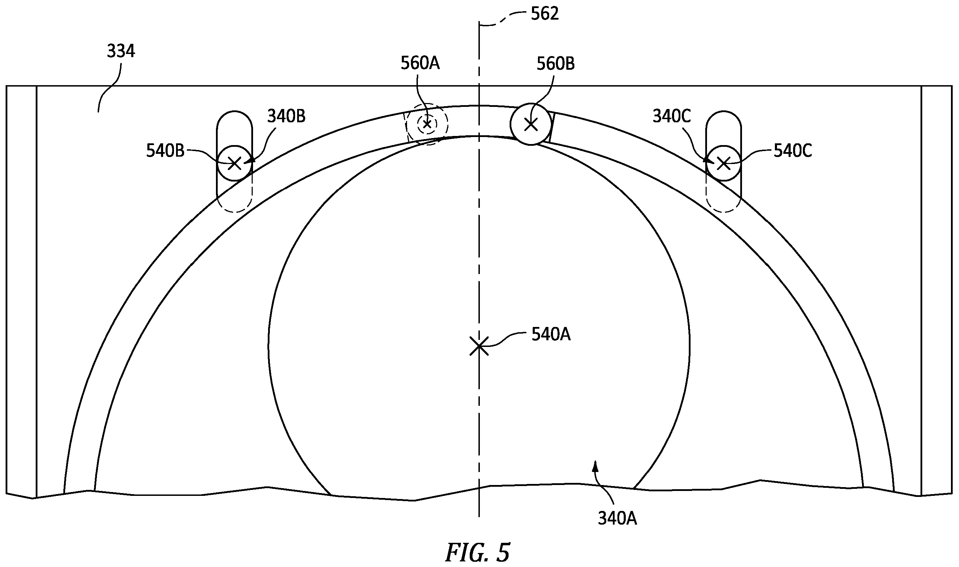

Other options involve somehow locking the OD surface at the joint under tensile stress or at least bringing the zone of tensile stress closer to the joint. For example, a clamp or sub-fixture locking the joint may allow tensile stress to be imposed right up to that clamp. FIGs. 4 and 5 show an example wherein at least a portion of the joint is able to be placed under tension during treatment. The fixture includes pins 320A, 320B (FIG. 4) for restraining the terminal overlapping portions 42, 44 of the shiplap joint (terminal circumferential portions of the seal piece). The pins have distal end portions 322 received in blind bores (non-through holes) in the axial end faces 32, 34 of the seal at the overlapping portions 42, 44. Main body sections 330 of the pins may be mounted such as in bores 332 of end plates 334, 336 of the fixture. A longitudinal vertical centerplane 562 includes the central roller axis 540A and centrally intersects the shiplap joint in the FIG. 4/5 condition.

To treat a treatment area surrounding the shiplap joint, the lateral rollers may be disengaged (e.g., after treating areas beyond the joint). The seal may be put in place with the shiplap joint centrally intersected by the centerplane 562. The pins may then be installed through the end plates to seat their distal end portions 322 in the bores 324. The lateral rollers may then be re-engages to the seal OD surface. The pins have axes 560A, 560B. Thus, the central roller forms a fulcrum for forces applied to the seal by the respective lateral rollers and the pins that are opposite such lateral rollers across the centerplane. This allows the OD surface to be put in tension at least partially into the shiplap joint from the main portion of the seal. Engagement of the pins with the portions of the bore 332 lateral/circumferential surface near the seal ID and the distal end of the associated overlapping portion 42, 44 allows the pinto bore engagement to place the seal OD surface in tension.

The inner diameter (ID) surface of an arcuate body such as a PSR may similarly be treated. Instead of imposing strain/deformation to locally contract and reduce the radius of curvature in the treatment zone or area, the imposed strain/deformation expand and increase the radius of curvature. For example, the central roller (FIG. 6) and its contact location may be on the OD surface and the lateral rollers and their contact locations may be on the ID surface.

In some examples, a face of a flat plate or flat bar (FIG. 7) is similarly placed under tensile strain/stress with the pair of laterally spaced rollers engaging that face and the central roller engaging the opposite face (the rollers having length at least that of the width of the plate or bar transverse to the movement direction). Thus. during the strain/stress, the plate or bar is bent to render the treatment zone convex.

Particularly for articles with more convoluted shapes the article shape can allow alternative contact locations to impose local tensile strains/stresses at other locations even more remote from the contact locations. And this may, for example, involve only two contact locations. For example, a substrate may be axially compressed between two contact points to tensile strain/stress some areas and then axially extended to tensile stress/strain others. In another example there may be diametrically opposite pressure on the ID of a continuous full annulus ring to impose ID tensile stresses 90° from the contact locations and OD tensile strain/stress at circumferential location of the ID contact locations.

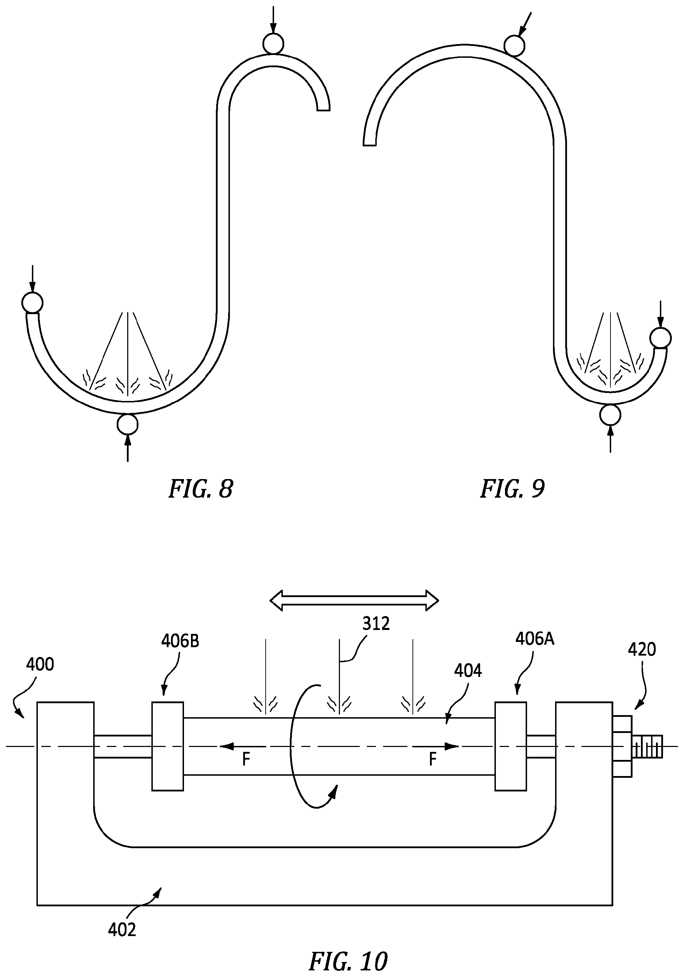

FIGs. 8 and 9 show contact locations for treating the two concavities of an S-hook in contrast with a PSR that gets near uniform circumferential loading, the in-use contact forces on the S-hook are more concentrated. Thus, each treatment may be at a single zone without need to progressively shift the contact locations or index them other than to shift between treating the two hook portions. In this example the contact locations need not be formed as rollers and one contact location for each treatment is at the cross-sectional end of the portion of the piece that forms the hook section being treated.

Additionally, the principles may be applied when laser treating articles other than PSRs or similarly arcuately shaped articles.

In other examples, the exterior surface of a substrate may be treated by placing the entire substrate in axial tension. An example of such substrate is a rod (e.g., a circular cylindrical rod in FIG. 10). Alternative such substrates include bars, plates, tubes, and the like. FIG. 10 shows a fixture 400 having a frame 402 to hold the rod 404 in tension. Clamps 406A, 406B or other fixturing may engage opposite ends of such an article (e.g., internally threaded fixtures or clamps 406A, 406B engaging externally threaded opposite ends of the rod) and may place the rod under tension (e.g., via a pneumatic or hydraulic actuator - or simply a nut 420 threaded onto a shaft of one of the clamps). The fixturing may rotate the rod about its axis to index for axial passes by the laser (e.g., held via an industrial robot or a carriage). The example fixtures/clamps may have bearings (not shown) to allow rotation of the rod about its central axis. Nevertheless, other combinations of movements are possible to provide desired coverage.

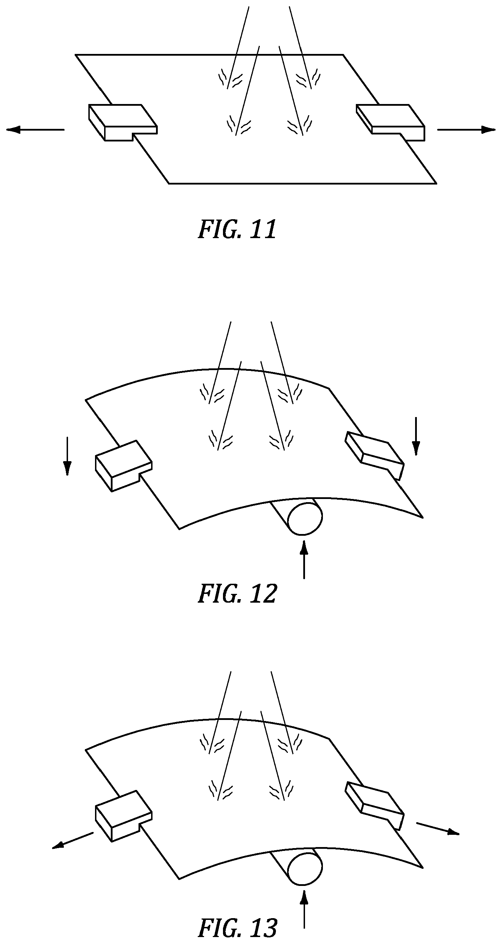

With a plate (FIG. 11), the laser may be mounted on an XY carriage (not shown) for movement parallel to the surface of the plate while the plate is held in tension.

FIG. 12 shows clamps along edges being used to pull downward against a central roller or other fulcrum engaging the plate underside.

FIG 13 shows the clamps being pulled downward and outward to combine direct tension and bending tension.

Other possible movements involve tortional/twisting movements providing at least local surface tension.

After the laser treatment, the substrate is released from the stress/strain. As noted in the PSR embodiment, the substrate may pass out of tensile stress once it leaves the zone of treatment. But then the external stress is released by disengaging the actuators once treatment is accomplished. The release at least partially relaxes the deformation. Upon the release, the surface may go into compressive stress.

Among alternatives to the lubricious oxide formation, example laser treatments may include laser cleaning, laser texturing, or laser etching/marking.

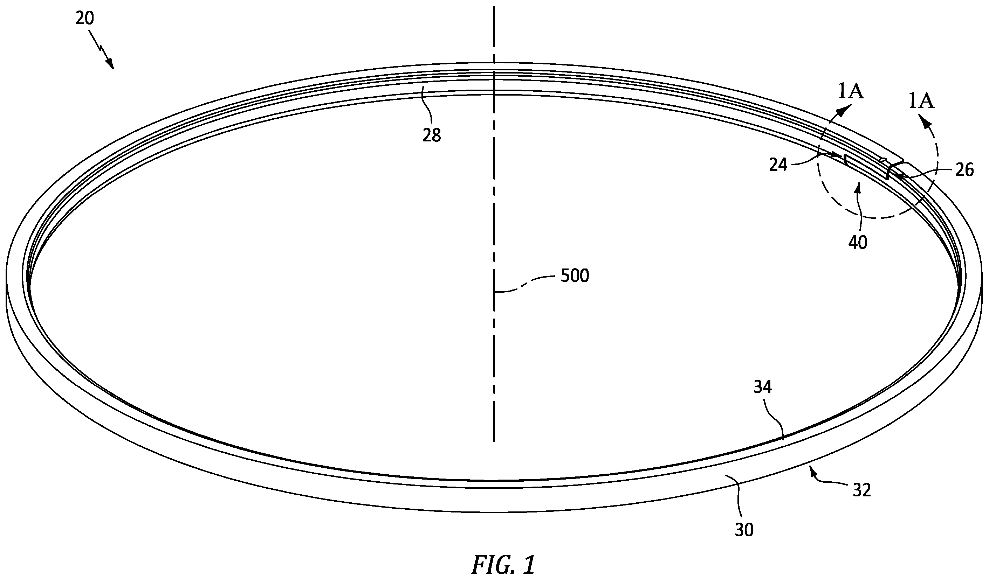

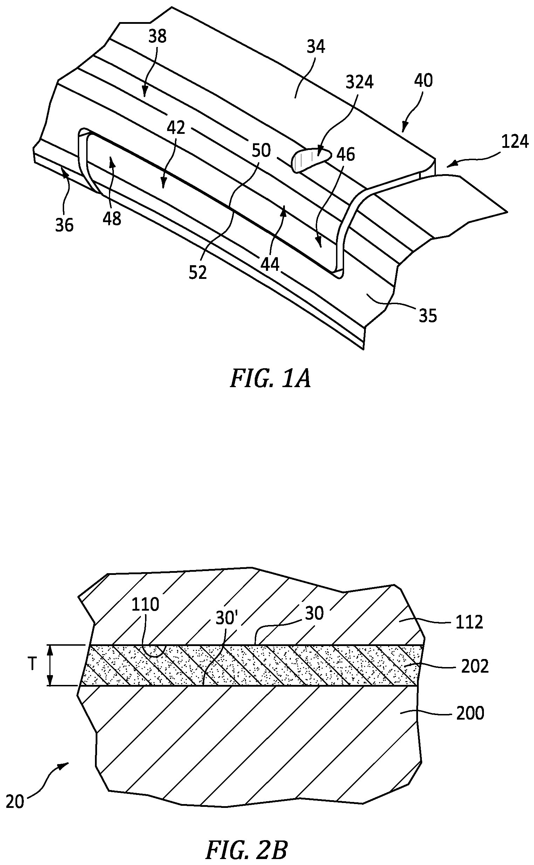

A further example of a PSR and process is discussed below. FIG. 1 shows a piston seal ring (PSR) formed as a split ring seal 20 having a first circumferential end 24, a second circumferential end 26, an inner diameter (ID) surface 28, an outer diameter (OD) surface 30, a first axial end face 32, and a second axial end face 34. The PSR has a nominal central longitudinal axis (centerline) 500 shared with the members it seals when in a nominally centered condition. FIG. 1A shows the ID surface 28 as having a straight (circular cylindrical) central portion 35 and more frustoconical transitions 36 and 38 to the axial end faces 32 and 34, respectively. In the example, there are more radiused transitions at the extremes of the transitions 36 and 38 than centrally within those transitions. Viewed in section, junctions between the axial end faces and ID and OD surfaces are shown as radiused corners. However, other junctions are possible.

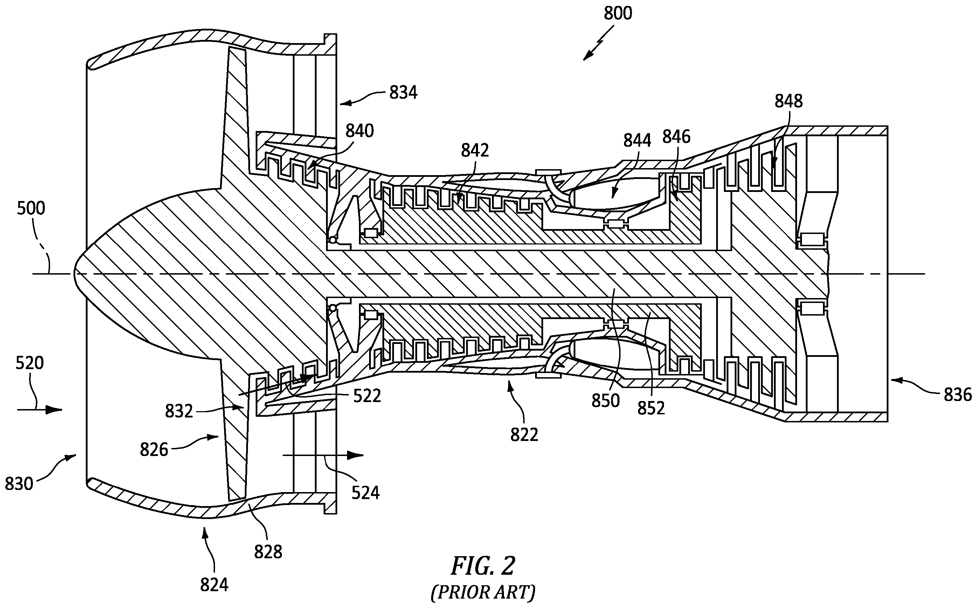

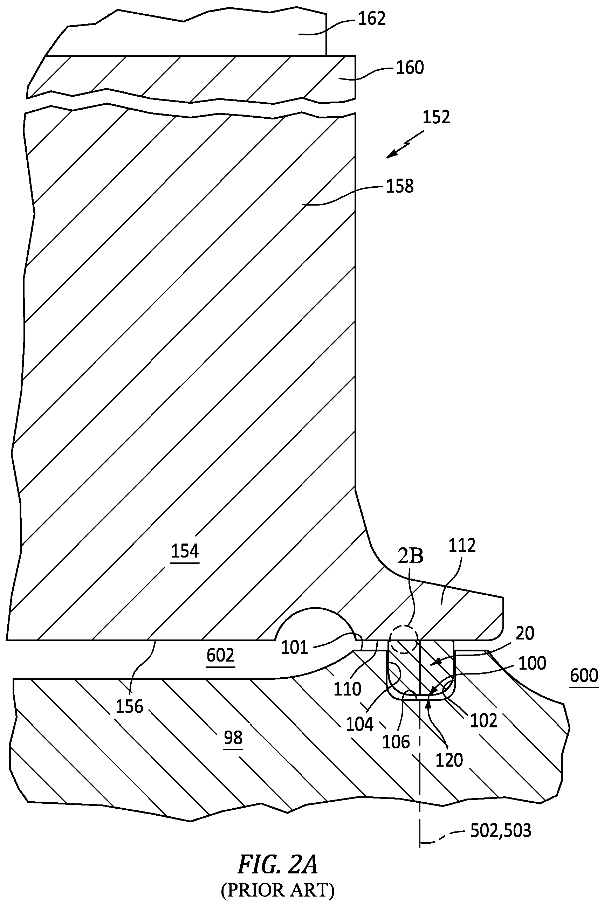

In the example, first circumferential end 24 and second circumferential end 26 form a joint or junction 40 (FIG. 1A). The example joint 40 is a shiplap joint with a projecting portion 42 of the first circumferential end received in a rebate 48 of the second circumferential end and a projecting portion 44 of the second circumferential end received in a rebate 46 in the first circumferential end. The example projecting portions have mating faces/surfaces 50, 52 which, in the example, closely face or contact along a transverse radial centerplane 502 (FIG. 2A) of the PSR.

The PSR comprises a single piece alloy substrate or first zone 200 (FIG. 2B) with one or more coating layers 202 or second zones along portions of its exterior surface (and thus forming associated portions of the exterior surface of the PSR). The coating/second zone is formed by laser treating the surface of an initial substrate leaving the first zone as essentially unaffected. In this example, the coating/second zone is shown as a single layer on the OD surface 30' of the substrate/first zone and thus the coating outer surface locally forms the OD surface 30 of the PSR to provide lubricious engagement with the runner ID surface 110. Similarly, the coating/zone 202 may extend along the axial end surfaces to provide lubricious engagement with groove walls 102 and 104. Coating/second zone thickness is shown as T. Example thickness is 50 nanometers to 200 micrometers, more particularly 100 nanometers to 10 micrometers or 200 nanometers to 50 micrometers. *See, Nánai et al.* above. The coating with its relevant composition noted above may thus exist on the entirety or at least a majority (at least 50%) of the OD surface of the substrate or of the OD and axial end surfaces. And in this or other applications such layer/zone may be on at least an example 10% of total surface area. In particular the aforementioned thicknesses and properties may be at a single location or may be over at least 50% of the PSR OD surface and/or may be measured as a mean, median, or modal value in/over such area. Particularly when also on end surfaces, this may be at least 50% of the overall area. Substrate (pre-treatment and/or surviving first zone) compositions described may be over substantially the entirety or at least 50% by mass or volume or at least 90% by mass or volume.

FIG. 2A shows the PSR 20 seated in an outer diameter groove 100 in an inner member (e.g., shaft or shaft section) 98 and sealing against an ID surface 110 of an outer member 112 (e.g., a seal runner). The groove 100 has a first sidewall or end wall 102, a second sidewall or end wall 104, and a base 106 joining the two. The groove has a transverse centerplane 503 which may be coincident with the PSR centerplane 502 when the PSR is centered in the groove. In the example gas turbine engine, the first sidewall is an aft sidewall and the second sidewall is a forward sidewall. Example junctions between the sidewalls and the base are shown as quarter-rounds, chamfers, or bevels 108. However, right angle junctions or other transitions are possible. The groove 100 extends radially inward from an outer diameter (OD) surface section or portion 101 of the inner member.

FIG. 2A shows the PSR in a gas turbine engine rotor 150 including the shaft section 98. Such a situation is discussed as background above. The example rotor is the high pressure compressor (HPC) portion of a high pressure spool of a two-spool engine. The rotor includes a stack of blade disks 152. Each blade disk includes a protuberant inner diameter (ID) bore 154 having an ID surface 156. A radial web 158 extends outward from the bore to a rim structure 160. A circumferential array of blades 162 (shown with airfoil tips cut away) may be mounted to the rim (e.g., via fir tree or dovetail mounting). Or, blade airfoils may be unitarily formed with the rim and the rest of the disk (e.g., an integrally bladed rotor (IBR)).

The example PSR seals between the rotor shaft section 98 and one of the disk bores 154 as they rotate as a unit. The PSR accommodates small excursions between the two members it seals due to dynamic or static loading, thermal effects, and the like. The example seal runner 112 is unitarily formed with the particular disk bore and protrudes axially from the disk bore near the ID surface thereof to a free distal end/rim of the seal runner. This is one non-limiting example of one baseline.

The example PSR has a relaxed condition wherein the circumferential ends 24 and 26 are not completely nested/bottomed against each other (there is a slight circumferential gap 124 (FIG. 1A). When assembled over the shaft and seated in the groove, there may be a small ID gap 120 FIG. 2A). However, the PSR OD surface 30 may be close to flush and even potentially sub-flush to the adjacent shaft OD surface 101. Thus, when the seal runner is assembled over the shaft and PSR, there is an at least local OD radial gap between the PSR OD surface 30 and the seal runner ID surface 110. However, when the shaft rotates, centrifugal action will radially expand the PSR, closing the OD gap and expanding the ID gap 120 (or creating the ID gap) and expanding the circumferential gap 124. This centrifugal action biases the PSR OD surface 30 into sealing engagement with the ID surface 110 of the seal runner.

FIG. 2A shows the sealing between a first region or volume 600 and a second region or volume 602. In an example dynamic operating condition, the first region is a high pressure region and the second region is a low pressure region.

Alternatively to sealing a disk bore to a shaft, such a seal may be applied to static structures such as cases.

Alternatively, applications beyond gas turbine engines include pumps, turbochargers, and other turbomachines.

FIG. 2 shows an example gas turbine engine 800 as a two-spool turbofan engine. Although shown as a high bypass turbofan, a low bypass turbofan may have similar features. The engine 800 has an engine case 822 surrounding a centerline or central longitudinal axis 500. An example engine has a fan section 824 including a fan 826 within a fan case 828. The example engine includes an inlet 830 at an upstream end of the fan case receiving an inlet flow along an inlet flowpath 520. The fan 826 has one or more stages 832 of fan blades (typically one in a high bypass turbofan and more in a low bypass turbofan). Downstream of the fan blades, the flowpath 520 splits into an inboard portion 522 being a core flowpath and passing through a core of the engine and an outboard portion 524 being a bypass flowpath exiting an outlet 834 of the fan case.

The core flowpath 522 proceeds downstream to an engine outlet 836 through one or more compressor sections, a combustor, and one or more turbine sections. The example engine has two axial compressor sections and two axial turbine sections, although other configurations are equally applicable. From upstream to downstream there is a low pressure compressor section (LPC) 840, a high pressure compressor section (HPC) 842, a combustor section 844, a high pressure turbine section (HPT) 846, and a low pressure turbine section (LPT) 848. Each of the LPC, HPC, HPT, and LPT comprises one or more stages of blades which may be interspersed with one or more stages of stator vanes. In many low bypass turbofan configurations, the core and bypass flows rejoin to exit a nozzle (e.g., a variable nozzle).

In the example engine, the blade stages of the LPC and LPT are part of a low pressure spool mounted for rotation about the axis 500. The example low pressure spool includes a shaft (low pressure shaft) 850 which couples the blade stages of the LPT to those of the LPC and allows the LPT to drive rotation of the LPC. In the example engine, the shaft 850 also drives the fan. In the example implementation, the fan is driven via a transmission (not shown, e.g., a fan gear drive system such as an epicyclic transmission) to allow the fan to rotate at a lower speed than the low pressure shaft.

The example engine further includes a high pressure shaft 852 (of which the shaft section 198 forms a section) mounted for rotation about the axis 500 and coupling the blade stages of the HPT to those of the HPC to allow the HPT to drive rotation of the HPC. In the combustor 844, fuel is introduced to compressed air from the HPC and combusted to produce a high pressure gas which, in turn, is expanded in the turbine sections to extract energy and drive rotation of the respective turbine sections and their associated compressor sections (to provide the compressed air to the combustor) and fan.

Regarding the example PSR and material, the initial substrate structure of an AMS5894 substrate is characterized by the presence of carbides. With reference to a baseline PSR such as the AMS5894 substrate with OD coating discussed above, some cracking of the carbides has been observed in new (zero cycle) PSRs apparently induced by production methods. Specifically, this cracking may be due to one or more of: 1) excessive contact stress that is applied to the PSR from the interfacing components during the gas turbine engine operation, this evolves into exacerbated and accelerated wear once the solid lubricant layer(s) wear out; 2) substrate defects due to flawed metallurgical practice (e.g., wrong chemical composition such as excessive carbon, un-controlled heat treatment (e.g., carbide coarsening due to cooling too slowly or grain refinement and residual stress due to cooling too quickly), and errors in forging practice); and 3) surface and sub-surface carbides cracking due to the machining and grit-blasting processes performed pre-coating.

Observation of in-use seals shows increasing use cycles progressively attritting the coating. During coating attrition, further carbide cracking increased. Additionally, particularly with the attrition of the base layer of multi-layer coatings, abrasive third-body carbide particles are liberated from the PSR at the interface of PSR with other contacting bodies.

As is discussed below, a laser treatment of the PSR substrate OD surface may create a substrate outer layer of modified chemistry and/or morphology/microstructure.

In a specific area of modified manufacture process relative to the baseline PSR manufacture process, a laser treatment of the substrate outer diameter (OD) surface is performed in an oxidative atmosphere in lieu of the conventional coating. *See, e.g.,* Nánai et al. above. The laser treatment yields an outer diameter (OD) layer or zone having modified chemistry and/or morphology/microstructure and an inner diameter (ID) zone essentially unchanged relative to the baseline. The particular first example laser treatment is a laser glazing that provides laser-induced oxidation to create a lubricious oxide glaze layer that replaces conventional deposited (e.g., baseline) coating. An example oxidative atmosphere is air.

Parameters of the laser treatment may resemble laser cleaning parameters but may be selected to induce oxidation. Thus, for example, whereas laser cleaning may feature cooling to prevent oxidation, the example laser treatment does not have cooling during treatment. An example laser treatment process involves a series of overlapping passes in one direction followed by a series of overlapping passes in an orthogonal direction (e.g., within up to 30° or up to 20° or up to 10° or up to 5° of exact orthogonality (exactly 90°).

In this example, treatment of the surface is done in two phases: cleaning; and laser treatment for oxide formation. The first phase would be to clean the substrate surface (e.g., chemical degreasing (alkali to acid to water), grit blasting, and/or laser cleaning). In an example featuring laser cleaning, the laser cleaning of the surface uses moderate power (e.g., 800W), moderate overlap (30% to 60% or 40% to 50% for example), and preferably the smallest number of passes need to remove organics, random undesirable oxides, and other contaminants. The same or close overlap may be used spot-to-spot in a given traversal or pass and then pass-to-pass.

The example laser cleaning also includes the use of cooling air or argon to limit or prevent oxide formation. Forced cooling air (e.g., from a compressed source or fan driven) hinders the oxidation by reducing the reaction-driving temperature rather than depriving the reaction of oxygen. For example, this may be performed in a controlled environment in a glove box. Depending on how delivered, argon will deprive oxygen and optionally cool. The laser cleaning may be over essentially the entire axial cross-sectional periphery of the PSR (OD surface, ID surface, and axial end (forward and aft) surfaces). This full coverage may require re-fixturing between stages (e.g., first supporting on a fixture engaging the OD surface to clean the ID surface and axial end surfaces and then supporting the ID surface on a fixture or mandrel to clean the OD surface).

In some embodiments, the PSR may remain on the same mandrel or fixture used to clean the OD surface to then perform the oxidative laser treatment. Thus, the possibility exists of modifying a baseline such fixture to add means for applying strain so as to tension the surface being treated. Depending upon implementation, the oxidative laser treatment may be performed using the same laser as the laser cleaning. In some embodiments, the laser cleaning may be performed with a single series of passes in a first direction (e.g., circumferential). In other embodiments, it may be performed with a first series of passes in one direction (e.g., circumferential or axial) and a second series of similarly overlapping passes in an orthogonal direction (e.g., axial or circumferential, respectively). This laser cleaning may be in lieu of a grit blast process in a baseline manufacture method.

Relative to the laser cleaning, the example oxidative laser treatment involves: higher laser power (e.g., 1000W); higher fluence; and more overlap (e.g., 50% to 80% or 60% to 80%) in both directions and within passed and between passes to increase the energy input to the surface. It may also be performed without cooling air or argon and could be done in an enriched O₂ environment (e.g., oxygen from an oxygen tank). Another potential difference is that even where the cleaning is via passes in a single direction (e.g., circumferential) the laser treatment may, nevertheless, be in both orthogonal directions. Additionally, the oxidative laser treatment may be on a smaller portion of the surface than the laser cleaning. For example, the oxidative laser treatment may be only on the OD surface vs. a full perimeter laser cleaning or may be on the OD and axial end surfaces (the latter to avoid wear from interaction with the groove).

When present, example wattage differences may have the oxidative laser treatment wattage at least 10% higher or at least 20% higher than the laser cleaning wattage (e.g., in either case with example upper limits of 100% higher or 50% higher). Fluence differences may be similar.

If present, overlap difference may be such that the oxidative laser treatment overlap is at least ten percentage points higher than the laser cleaning overlap (e.g., 50% versus 40% or 70% versus 60%) or at least fifteen percentage points higher or an example ten percentage points to sixty percentage points or ten percentage points to 50 percentage points.

This oxide inducing step, distinct from the cleaning step, would have an example laser fluence (energy input) ranging from about 17 J/cm² to 44 J/cm².

Two examples of oxidative laser treatment tests were performed on AMS5894 0.5 inch (12.7mm) cubes to verify oxide layer production (not under the tensile stress). Both were in open air and tested laser parameters were: 1064nm wavelength; 1000W laser power; 70ns pulse duration; 10kHz pulse repetition rate (PRR); 1.524mm x 1.524mm (square spot) laser spot; 4.32 J/cm² fluence per shot.

The first test involved 50% overlap, two orthogonal series, total energy input of 17.24J/m². This approximates the lowest energy input needed to produce the oxides on the surface.

The second test involved 80% overlap, two orthogonal series, total energy input of 43. 1J/cm².

By way of comparison, a separate furnace oxidation trial was performed with a variety of parameters using similar specimen cubes. Ultimately, similar oxidation was observed at prolonged time at high temperature. However, such alternative furnace processes may be detrimental in addition to time consuming. Specifically, the prolonged elevated temperature may compromise substrate structure. Additionally, other surface portions of the substrate where no lubricious coating is needed will also be oxidized (unless masked which presents additional efforts and costs). Thus, the oxidative laser treatment offers benefits of speed and treatment localization as well as limiting alteration of the substrate below the coating.

The example OD zone/coating layer is believed characterized by oxides of chromium and/or cobalt (Cr₂O₃ and Cr₂CoO₄) observed by x-ray diffraction in the furnace oxidation trials with Cr₂CoO₄ appearing at around 750°F (399°C) with elevated time and Cr₂O₃ appearing with further temperature increases toward 1000°F(538°C). Table I below shows the furnace oxidation tests:

**Table I**

| Furnace Oxidation | | |
|---|---|---|
| | Ratio of Surface Oxide Phases (Determined by XRD) | |
| Sample (Hrs. & Oxidation Temp (F)) | Cr₂CoO₄ | Cr₂O₃ |
| 75 hrs. @ 750°F (399°C) | 100 | - |
| 500 hrs. @ 750°F (399°C) | 100 | - |
| 36 hrs. @ 1000°F (538°C) | 35 | 65 |
| 75 hrs. @ 1000°F (538°C) | 29 | 71 |
| 500 hrs. @ 1000°F (538°C) | 26 | 74 |

The numbers indicate the relative surface area of Cr₂CoO₄ and Cr₂O₃ to each other without reference to unoxidized metal, other oxides, and other material, if any. These values can serve to measure relative volumes of the two materials.

The higher temperatures are believed to encourage outward diffusion of Cr. Thus, at a minimum, generation of Cr₂CoO₄ is expected in the laser-treated material but the observations are consistent with substantial Cr₂O₃. This is based on both observed temperatures exceeding 1000°F (538°C) during the oxidative laser treatment and observation of the final treated specimen appearing similar to the 1000°F (538°C) furnace specimens. Thus, although it may be difficult to estimate, a surface area ratio of Cr₂O₃ to Cr₂CoO₄ on the treated surface may be at least or in excess of 1:1 or 1.5:1 or 2:1 or 2.5:1. An example upper end for substantial mix is 3:1 or 4:1 or 5:1.

There may be a depthwise gradation in the relative content of the two oxides in the layer. It is expected that there will be decreasing relative Cr₂O₃ content of the layer further in from the surface due to Cr depletion. However, over a depthwise zone, the layer may be characterized by a threshold minimum Cr₂O₃ content and threshold average (mean) Cr₂O₃ content. Thus, a 1:1 ratio or greater near the bottom of the layer or zone may progress to a ratio in excess of 2:1 at the surface. In such a situation the overall ratio in the layer or zone will be between the two. Example overall volume ratios in the layer may thus be at least or in excess of 1:1 or 1.5:1 or 2:1 or 2.5:1. Again for mixes, optional upper ends are 3:1 or 4:1 or 5:1.

There also may be a depthwise gradation in the overall/absolute oxide content of the layer with decreasing oxide further in from the surface. However, over a depthwise zone, there may be a threshold minimum oxide content (e.g., at the bottom of the layer or zone) and threshold average (mean) oxide content of the layer or zone.

Thus, example combined Cr₂O₃ and Cr₂CoO₄ content in the layer/zone may be at least 25% by volume or weight or may be at least 40% or at least 50% or at least 60% or at least 70% or 80% to 100%. However, for lubricity purposes, avoiding the high oxidation end of this range may be desired. Thus, a lower target than 100% may be appropriate. Accordingly, example upper limits for various lubricity uses (paired with the aforementioned lower limits) may be 50% or 60% or 70% or 75% by volume or weight.

Example thickness of the oxide layer or zone thereof is 50 nanometers to 200 micrometers, more particularly 100 nanometers to 10 micrometers or 200 nanometers to 50 micrometers. This may be just a local value at one point or a value over a relevant coated area. An example coated area is at least 10 % of a surface area of a substrate.

One difference among various Stellite^{®} family alloys is the carbon content that impacts the carbide volume fraction. With about 1 wt.% carbon in Stellite^{®} 6B, the carbides constitute approximately 13 wt% of the material. Additionally, the carbides are predominantly primary carbides. Primary carbides are large in size and of the formulas: MC (where M = W,Ta, Nb, Zr, and/or Ti); or M₇C₃ (where M = Cr, W, and/or Mo). Secondary carbides are small in size and of the formulas: M₂₃C₆ (where M = Cr and/or Mo); or M₆C (where M = Mo and/or W).

Stellite^{®} 6B is capable of operating well (e.g., low wear) at a wide range of temperatures. It has carbide strengthening at low temperature to provide wear resistance and oxide glaze layer formation at elevated temperature to provide act as a friction mitigator to limit wear.

Other Sellite^{®} grades are more suitable either for high temperatures or for low temperatures, but not both.

Stellite^{®} 6B has higher hardness compared to solid solution Stellite^{®} alloy grades (e.g., Stellite^{®} 21) providing sufficient wear resistance and lower hardness compared to the carbide-rich grades (e.g., Stellite^{®} 12, 1, 20, 100) limiting the wear on the counterface.). Most other Stellite^{®} grades are typically cast. Wrought Stellite^{®} 6B may be advantageous in terms of manufacturability and/or lower brittleness compared to cast Stellite^{®} grades.

As noted above, example Stellite^{®} 6B total carbide content is about 13 wt.%. More broadly for a range of candidate alloys, example total carbides are about 10% to 16% by weight, more broadly 10% to 20% by weight. Lower carbide content may decrease wear resistance. Higher carbide content may increase wear on the counterface.

Tables II and III below give candidate substrate alloys (examples as nominal values and specifications and additional ranges) including specific Stellite^{®} family examples and others.

**Table II**

| Substrate Alloys (weight percentages) | | | | | | | | | | | | |
|---|---|---|---|---|---|---|---|---|---|---|---|---|
| Alloy | C | Mn | Si | P | S | Cr | Ni | Co | Mo | w | Fe | Other |
| Cobalt Alloy 6b AMS 5894 (wrought) | 0.90-1.40 | 0.50-2.00 | 0.20-2.00 | 0.04 max | 0.03 max | 28.00-32.00 | 3.00 max | bal | 1.50 max | 3.50-5.50 | 3.0 max | |
| 6b nom. (wrought) | 1.15 | 1.25 | 1.10 | | | 30 | | bal | | 4.5 | | |
| 6k (wrought) | 1.40-1.90 | 0.50-2.00 | 0.20-2.00 | 0.04 max | 0.03 max | 28.00-32.00 | 3.00 max | bal | 1.50 max | 3.50-5.50 | 3.0 max | |
| 6k nom (wrought) | 1.6 | 2.0 max | 2.0 max | | | 30 | 3.0 max | bal | | | | |
| 706K (nom) | 1.4 | 1.5 max | 1.5 max | | | 29 | 3 max | bal | 6 | | 3 | |
| Haynes 25 UNS R30605 (AMS 5796) | 0.1 | 1.5 | 0.4 max | | | 20 | 10 | bal | | 15 | 3 max | |
| UNS R30605 (AMS 5796) | 0.05-0.15 | 1.00-2.00 | 1.00 max | 0.04 max | 0.03 max | 19.00-21.00 | 9.00-11.00 | bal | | 14.00-16.00 | 3.00 max | |
| Haynes 188 (wrought) UNS R30188 (AMS 5608) | 0.1 | 1.25 | 0.35 | | | 22 | 22 | bal | | 14 | 3 max | 0.03 La |
| UNS R30188 (AMS 5608) | 0.05-0.15 | 1.25 max | 0.20-0.50 | 0.020 max | 0.015 max | 20.00-24.00 | 20.00-24.00 | bal | | 13.00-16.00 | 3.00 max | 0.02-0.12 La 0.015 max B |
| MAR-M-302 | 0.85 | | | | | 21.5 | | 58 | | 10 | 0.5 | 9 Ta; 0.2 Zr; 0.005 B |
| MAR-M-322 | 1.0 | | | | | 21.5 | | 60.5 | | 9 | 0.5 | 4.5 Ta; 2 Zr; 0.75 Ti |
| MAR-M-509 | 0.6 | | | | | 23.5 | 10 | 54.5 | | 7 | | 3.5 Ta; 0.5 Zr; 0.2 Ti |
| Stellite 31 | 0.5 | 0.5 | 0.5 | | | 22 | 10 | 57.5 | | 7.5 | 1.5 | |
| S-816 (UNS R30816) | 0.37 | 1.5 | 1 max | | | 20 | 20 | 40 min | 4 | 4 | 5 max | 4 Nb |

**Table III**

| Substrate Alloys -Additional Ranges (weight percentages) | | | | | | | | | | | | |
|---|---|---|---|---|---|---|---|---|---|---|---|---|
| Range | C | Mn | Si | P | S | Cr | Ni | Co | Mo | w | Fe | Other |
| Range 1 | ≤2.0 | ≤2.5 | ≤2.5 | ≤0.1 | ≤0.1 | 18.0-35.0 | ≤30.0 | bal | ≤8.0 | ≤16.0 | ≤10.0 | † |
| Range 2 | ≤2.0 | ≤2.5 | ≤2.5 | ≤0.1 | ≤0.1 | 18.0-35.0 | ≤30.0 | bal | ≤3.0 | ≤3.0 | ≤4.0 | † |
| Range 3 | ≤2.0 | ≤2.5 | ≤2.5 | ≤0.1 | ≤0.1 | 18-35 | ≤25 | bal | ≤8.0 | ≤16.0 | ≤4.0 | †† |
| Range 4 | ≤2.0 | ≤2.5 | ≤2.5 | ≤0.1 | ≤0.1 | 27-32 | ≤4.0 | bal | ≤2.0 | ≤6.0 | ≤4.0 | †† |
| Range 5 | ≤2.0 | ≤2.5 | ≤2.5 | ≤0.1 | ≤0.1 | 27-32 | ≤4.0 | bal | ≤2.0 | 3.0-6.0 | ≤4.0 | †† |
| Range 6 | 0.90-2.00 | 0.50-2.00 | 0.20-2.00 | 0.04 max | 0.03 max | 28.00-32.00 | 3.00 max | bal | 1.50 max | 3.00-6.00 | 3.0 max | ††† |
| Range 7 | 0.90-1.90 | 0.50-2.00 | 0.20-2.00 | 0.04 max | 0.03 max | 28.00-32.00 | 3.00 max | bal | 1.50 max | 3.50-5.50 | 3.0 max | ††† |
| Range 8 | 0.90-1.40 | 0.50-2.00 | 0.20-2.00 | 0.04 max | 0.03 max | 28.00-32.00 | 3.00 max | bal | 1.50 max | 3.50-5.50 | 3.0 max | ††† |
| Range 9 | 0.90-1.40 | 0.50-2.00 | 0.20-2.00 | 0.04 max | 0.03 max | 25.00-35.00 | 3.00 max | bal | 1.50 max | 3.50-5.50 | 3.0 max | ††† |
| Range 10 | 0.90-1.90 | 0.50-2.00 | 0.20-2.00 | 0.04 max | 0.03 max | 25.00-35.00 | 3.00 max | bal | 1.50 max | 3.50-5.50 | 3.0 max | ††† |
| Range 11 | 0.05-2.0 | ≤2.5 | ≤2.5 | ≤0.1 | ≤0.1 | 18.0-35.0 | ≤30.0 | bal | ≤8.0 | ≤16.0 | ≤6.0 | †††† |
| Range 12 | 0.05-2.0 | ≤2.5 | ≤2.5 | ≤0.1 | ≤0.1 | 18.0-35.0 | ≤30.0 | bal | ≤8.0 | ≤16.0 | ≤5.0 | †††† |
| Range 13 | 0.05-2.0 | ≤2.0 | ≤2.0 | ≤0.1 | ≤0.1 | 18.0-35.0 | ≤30.0 | bal | ≤8.0 | ≤16.0 | ≤4.0 | †††† |
| Range 14 | 0.05-2.0 | ≤2.5 | ≤2.5 | ≤0.1 | ≤0.1 | 18.0-35.0 | ≤30.0 | bal | ≤8.0 | ≤16.0 | ≤5.0 | ††††† |
| Range 15 | 0.05-2.0 | ≤2.0 | ≤2.0 | ≤0.1 | ≤0.1 | 18.0-35.0 | ≤30.0 | bal | ≤8.0 | ≤16.0 | ≤5.0 | †††††† |

| | | | | | | | | | | | | |
|---|---|---|---|---|---|---|---|---|---|---|---|---|
| † ≤ 15.0 Other total; ≤ 7.0 other individually †† ≤ 5.0 Other total; ≤ 1.0 other individually ††† ≤ 2.0 Other total; ≤ 0.50 other individually †††† ≤ 15.0 Other total; ≤10.0 other individually ††††† ≤ 15.0 Other total; ≤6.0 other individually (except for ≤10.0 Ta) †††††† ≤ 12.0 Other total; ≤3.0 other individually (except for ≤10.0 Ta, Al, and Nb combined with 4.5 max Al, 9.0 max Ta and 4.0 max Nb) | | | | | | | | | | | | |

Generally, these example alloys are all cobalt-based with cobalt as the largest by-weight constituent element. These alloys mostly then have chromium as the second largest by-weight constituent element or very close with nickel (e.g. not more than a 4.0 weight percent difference or 2.0 weight percent). The various "other" ranges marked with one or more daggers may be substituted for each other in Table III and added to the Table II examples to create other ranges. Or impurities may be such as discussed below. Further variations on the Table III ranges may be formed by one or more of several further modifications. For example, from Ranges 1, 2, and 11-15, narrower alternatives on nickel and/or chromium content may be obtained. For low-nickel alloys these may be obtained by imposing a 3.0 max or a 4.0 max on nickel. For higher nickel alloys, a range such as 9.0 to 24.0 may be imposed. A low to mid range could be up to 12.0 max. The higher range of nickel, particularly in the 20 to 24 range, may offer some manufacture advantages but will offer less Co and/or Cr for oxide formation.

Similarly, a lower chromium range may be provided in the 18.0-24.0 range and a higher in the 25.0-35.0 range or 28.0 to 32.0 range.

Also, the lower tungsten ranges of any of Ranges 2, 4 and 6-10 may be incorporated into variants of Ranges 11-15. Or a low to mid range of ≤10.0 may be used. Similarly, the molybdenum range of Ranges 2, 4, or 6 may be incorporated into variants of Ranges 11-15 along with any of the other identified substitutions.

Also, for the Table II alloys that have numbers in the Co column, these may be replaced by "Bal." And candidate alloys may include those having about or substantially the specific elemental contents of any of those.

In general, for high temperature cobalt-based alloys, chromium is known to add oxidation and sulfidation resistance and to serve as a carbide former for M₇C₃ and M₂₃C₆ carbides. Molybdenum and tungsten are known solid solution strengtheners and carbide formers for M₆C and for forming Co₃M intermetallics. Nickel is known to stabilize fcc matrix and for forming Ni₃Ti intermetallic to facilitate working. Carbon provides for formation of carbides (MC, M₇C₃, M₆C, M₂₃C₆). Yttrium and lanthanum provide oxidation resistance.

Tantalum and niobium are also known solid solution strengtheners and carbide formers for MC and M₆C and for forming Co₃M intermetallics. Aluminum is known for oxidation resistance and CoAl intermetallics. Aluminum and niobium help form precipitates. Thus, there can be a trade-off between Ta, Al, and Nb (thus the table entry for ≤10.0 Ta, Al, and Nb combined with 4.5 max Al, 9.0 max Ta and 4.0 max Nb.) Titanium is known as a carbide former for MC and for forming Co₃Ti (and Ni₃Ti with sufficient Ni). Boron and zirconium increase stress-rupture strength. Example Ti content for this purpose is up to about 3.0 or 4.0 weight percent.

Thus, there may be intentional levels of various such additions. Any of the examples or ranges above may optionally include impurity levels (e.g., commercial impurities or inevitable impurities) of any element not listed of for which a specific value is not given. Elements not typically present in Co-based alloys or present at impurity or low levels such as ≤0.1 are Cu, Ag, Pb, N, P, As, Sb, Bi, O, S, Se, Te, He, and Ar. Ti typically falls into such categories but has notable exceptions in the ≤1.0 or ≤2.0 range as in Table II. Mg, Ca, Y, Ce, La, Zr, B, and C are more likely to be intentionally included but in small amounts typically ≤1.0 or ≤2.0 for C and Zr with slight upside for Zr.

Other cobalt-containing alloys such as the cobalt-nickel-iron based IN783 may initially be positive candidates due to cobalt oxide formation. However, the high iron content potentially creates high friction iron oxides. Specifically, rather than being lubricious, iron oxide has a higher friction coefficient compared to cobalt oxide and nickel oxide. From an energy perspective iron oxidizes preferentially to cobalt and nickel which would exacerbate.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A method for laser treating a substrate of a piston seal ring (PSR) (20) for a gas turbine engine (800), the method comprising:
deforming the substrate to place a portion (310) of a first surface (30) of the substrate in tensile stress; and
while holding the substrate deformed, laser treating the portion (310).

2. The method of claim 1 wherein the laser treating:
forms an oxide coating (202) on the substrate.

3. The method of claim 1 or 2 further comprising:
releasing the substrate from the holding to allow at least partial relaxation of the deformation.

4. The method of any preceding claim wherein:
the tensile stress is 750MPa to 1035MPa; and
the laser treating normalizes the tensile stress to a reduced value while the first surface (30) of the substrate is under tension.

5. The method of any preceding claim wherein:
the substrate is not shot peened before the laser treating.

6. The method of any preceding claim wherein the laser treating does not do any of:
weld to the substrate;
shock peen the substrate; and
deposit metal on the substrate.

7. The method of any preceding claim wherein the deforming comprises:
applying pressure to a second surface (28) opposite the portion (310) of the first surface (30); and
applying pressure to the first surface (30) at two locations (302B, 302C) wherein the laser treating is between the two locations (302B, 302C).

8. The method of claim 7 wherein:
the substrate has a shiplap joint (40); and
the first surface (30) is an outer diameter (OD) surface (30).

9. The method of claim 8 further comprising:
shifting the location of the portion (310), optionally wherein the shifting is a stepwise indexing.

10. The method of claim 8 or 9 further comprising:
restraining circumferential end portions (42, 44) of the PSR (20) at the shiplap joint (40) while applying pressure to the second surface (28) and to the first surface (30) opposite from the shiplap joint (40) relative to the location of force application to the second surface (28).

11. The method of claim 10 wherein:
the restraining is simultaneous restraint of the respective end portions (42, 44) while the applying pressure at the first surface (30) is at two respective locations on opposite sides of the shiplap joint (40); and/or
the restraining comprises inserting pins (320A, 320B) into recesses (324) in overlapping portions (42, 44) of the shiplap joint (40).

12. A method for using a substrate treated according to the method of any preceding claim, the method comprising:
installing the piston seal ring (PSR) (20) in a gas turbine engine (800) between a shaft (98; 850; 852) of a spool and a disk (152) of the spool; and
running the engine (800) to produce non-continuous motion between the PSR (20) and the disk (152).

13. A piston seal ring (20) for a gas turbine engine (800) having:
an inner diameter surface (28);
an outer diameter surface (30);
a fist axial end surface (32);
a second axial end surface (34); and
first and second axially overlapping circumferential end portions (42, 44), wherein the first and second axially overlapping circumferential end portions (42, 44) each have:
a recess (324), wherein the recess (324) is a non-through hole (324).

14. The piston seal ring of claim 13 wherein:
each said recess (324) has a proximally facing wall section; and/or each said recess (324) has a radially outward facing wall section.

15. The piston seal ring of claims 13 or 14, having a zone of residual compressive stress near the outer diameter surface.
